# DEMANDE DE BREVET EUROPEEN

(11) **EP 0 771 043 A1**
(43) Date de publication de la demande: **02.05.1997**
(21) Numéro de dépôt: 96116207.0
(22) Date de dépôt: 10.10.1996
(51) Int. Cl.: H01M 10/48, H02J 7/00

(54) **Dispositif de gestion de batteries électriques**

(30) Priorité: 24.10.1995 FR 9512519
(71) Demandeur: EM Microelectronic-Marin SA, CH-2074 Marin (CH)
(72) Inventeur: Brülhardt, Marcel, 1588 Cudrefin (CH); Terrier, Christian, 2035 Corcelles (CH)
(74) Mandataire: Patry, Didier Marcel Pierre

(57) **Abrégé**

Ce dispositif (1) de gestion d'une pluralité d'éléments de batterie électrique (2) connectés en série, comprend une pluralité de modules (4) de gestion de batterie, chaque module de gestion étant connecté en parallèle aux bornes d'un élément de batterie (2) respectif et alimenté par sa tension de sortie, les modules de gestion (4) comportant un circuit numérique (11) et étant connectés en série entre eux par au moins une liaison numérique (9,9') de façon à pouvoir échanger des informations binaires entre lesdits circuits numériques (11) et une unité de contrôle (5) de la batterie, est caractérisé en ce qu'au moins un condensateur (8,8') est connecté en série sur ladite liaison numérique (9,9'), de sorte que des informations binaires peuvent être échangées entre chaque module de gestion (4) et l'unité de contrôle (5), indépendamment des potentiels électriques aux bornes des éléments de batterie (2).

## Description

La présente invention concerne un dispositif de gestion de batteries électriques.

L'invention s'applique en particulier à la gestion des batteries d'alimentation d'un véhicule à moteur électrique, mais également de façon générale à tous les systèmes faisant appel à une pluralité de batteries reliées en série.

Dans les dispositifs de ce type, plusieurs batteries, par exemple des batteries de 24 V de tension sont reliées en série, afin d'obtenir une tension plus élevée correspondant à la tension d'alimentation d'un moteur électrique. Un module de gestion de batterie est branché aux bornes de chaque batterie, afin d'en surveiller un certain nombre de paramètres liés à l'état de la batterie et à son évolution dans le temps, comme par exemple la température et la tension de la batterie.

Les modules de gestion sont reliés en série, un des modules étant également relié à une unité de contrôle, comportant typiquement des circuits logiques et/ou un microprocesseur.

Dans ce contexte, un des problèmes posés pour gérer l'état de l'ensemble des batteries reliées réside dans la communication entre les différents modules de gestion de batterie et l'unité de contrôle, étant entendu qu'une isolation galvanique doit exister entre la tension de sortie des éléments de batterie, une tension élevée qui est par exemple de l'ordre de 24 V et qui peut comporter des tensions parasites, et la tension d'alimentation des circuits numériques des modules de gestion et de l'unité de contrôle, qui est une tension continue de plus faible amplitude, par exemple de l'ordre de 5 V, et qui doit être exempte de pics de tension parasites.

Selon une réalisation connue dans l'état de la technique, chaque module de gestion associé à une batterie est scindé en deux parties isolées galvaniquement, par exemple une première partie comportant des circuits électroniques de mesure des paramètres de tension et de température de la batterie et de conversion analogique -numérique de ces mesures, et une seconde partie isolée galvaniquement de la première, dont elle reçoit les données numériques correspondant aux mesures, les données de chaque module étant alors transmises par un bus à un calculateur. L'isolation galvanique est réalisée par des coupleurs d'isolation, par exemple des photocoupleurs ou des coupleurs inductifs, permettant d'échanger avec le circuit de commande de la batterie des informations de lecture d'état de la batterie, et des informations de commande du courant de charge et du courant prélevé. L'isolation galvanique ainsi obtenue entre chaque module de gestion et la batterie associée est certes excellente, mais le coût et la complexité de l'ensemble du dispositif de gestion de batteries en sont fortement pénalisés, du fait que l'on utilise dans chaque module de gestion deux puces électroniques, connectées de part et d'autre d'un coupleur d'isolation.

La présente invention a pour but de remédier à ces inconvénients, et de proposer un dispositif de gestion de batterie ayant une structure plus simple et moins coûteuse, tout en préservant l'isolation galvanique entre la tension de sortie des batteries et l'alimentation des modules de gestion de batterie et de l'unité de contrôle.

Un autre but de l'invention est de proposer un dispositif de gestion de batterie dans lequel chaque module de gestion ne comporte qu'une seule puce, alimentée par la batterie.

Un autre but de l'invention est de proposer un dispositif de gestion de batterie permettant de commander l'ensemble des modules de gestion de batterie à partir d'une unité de contrôle unique connectée directement à un seul module de gestion d'élément de batterie.

A cet effet, l'invention a pour objet un dispositif de gestion d'une pluralité d'éléments de batterie électrique connectés en série, comprenant une pluralité de modules de gestion de batterie, chaque module de gestion étant connecté en parallèle aux bornes d'un élément de batterie respectif et alimenté par sa tension de sortie, les modules de gestion comportant un circuit numérique et étant connectés en série entre eux par au moins une liaison numérique de façon à pouvoir échanger des informations binaires entre lesdits circuits numériques et une unité de contrôle de la batterie, caractérisé en ce qu'au moins un condensateur est connecté en série sur ladite liaison numérique entre deux modules de gestion successifs, de sorte que les informations binaires échangées entre chaque module de gestion et l'unité de contrôle sont indépendantes des potentiels électriques continus aux bornes des éléments de batterie.

Selon d'autres caractéristiques de l'invention :
- le circuit numérique comporte une entrée d'horloge et une entrée/sortie de données, et ladite liaison numérique comporte une ligne d'horloge reliant les entrées d'horloge des modules de gestion successifs à la sortie d'horloge de l'unité de contrôle à travers des premiers condensateurs, et une ligne de données reliant en série les entrées/sorties de données des modules de gestion successifs à l'entrée/sortie de données de l'unité de contrôle à travers des seconds condensateurs, de sorte que les informations d'horloge et de données se propagent d'un module à un module adjacent respectivement à travers lesdits premiers et seconds condensateurs, indépendamment du potentiel des bornes d'alimentation de chaque module.
- le circuit numérique comporte un convertisseur analogique/numérique recevant en entrée un signal d'horloge et un signal de données représentatif d'une commande issue de l'unité de contrôle, et délivrant en sortie un signal analogique apte à contrôler un paramètre de fonctionnement de l'élément de batterie associé.
- le circuit numérique comporte un circuit de décodage d'adresse pour décoder à partir du signal de données l'adresse du module de gestion auquel la commande issue de l'unité de contrôle est destinée.
- le paramètre de fonctionnement étant constitué par la température d'un élément de batterie, le module de gestion comporte un moyen de commande apte à régler la température du module en fonction de la commande reçue.
- le paramètre de fonctionnement étant constitué par la tension de sortie de l'élément de batterie, le module de gestion comporte un moyen de commande apte à régler ladite tension de sortie.
- le paramètre de fonctionnement étant constitué par le courant de sortie de l'élément de batterie, le module de gestion comporte un moyen de commande apte à régler ledit courant de sortie.
- les condensateurs a une capacité de l'ordre de 4,7 à 10 nanofarad.
- un amplificateur est connecté en série entre les condensateurs de deux modules de gestion adjacents.

Les objets et caractéristiques de l'invention vont être décrits plus en détail et à titre d'exemple non limitatif en liaison avec les dessins, dans lesquels :
- la figure 1 est un schéma de principe du dispositif de gestion de batteries selon l'invention, comportant une pluralité de modules de gestion connectés en série.
- la figure 2 est un schéma agrandi d'un exemple de module du dispositif de gestion de batteries de la figure 1.
- la figure 3 est un schéma de réalisation plus détaillé du dispositif de la figure 1.

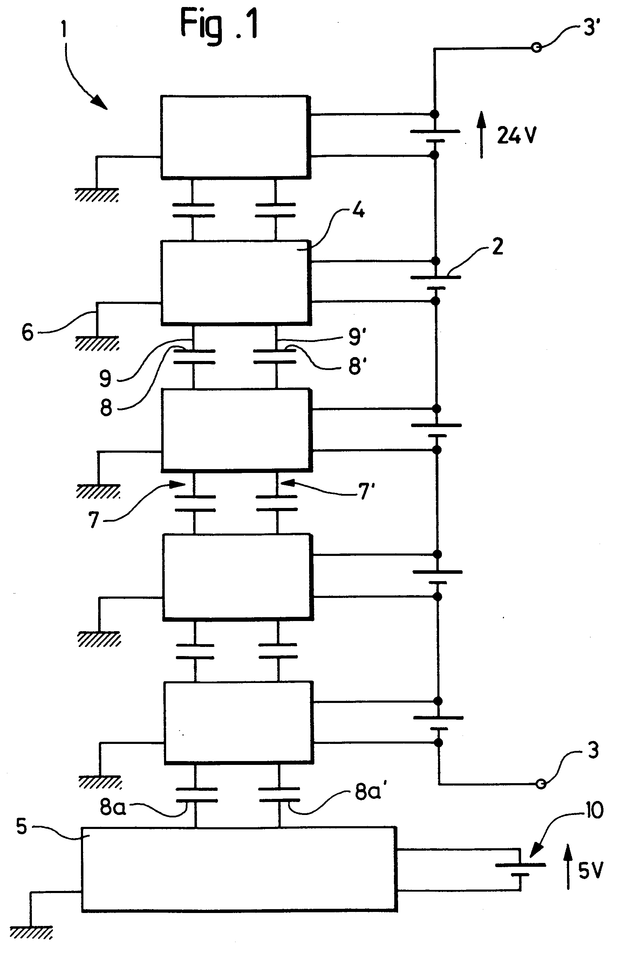

On se réfère à la figure 1. On a représenté dans cette figure un dispositif 1 de gestion d'une batterie électrique composée par la connexion en série d'une pluralité d'éléments de batteries électriques 2, de sorte que la batterie produise à ses bornes 3,3' une certaine tension électrique continue utilisable pour alimenter un dispositif électromécanique tel qu'un moteur électrique (non représenté).

Aux bornes de chaque élément de batterie 2 est connecté un module de gestion 4 de cet élément de batterie. Chaque module de gestion 4 comporte des circuits électroniques qui seront détaillés plus loin, destinés à mesurer certains paramètres de fonctionnement de l'élément de batterie 2, et à ajuster le courant tiré de cet élément ou la tension à ses bornes, afin de réguler le fonctionnement de l'ensemble de la batterie. A cet effet, il est nécessaire que le fonctionnement de tous les modules de gestion 4 soit coordonné par une unité de contrôle 5, qui tient compte des paramètres de fonctionnement de tous les éléments de batterie afin d'optimiser le fonctionnement global de la batterie. Les algorithmes de traitement d'une telle unité de contrôle 5 sont connus en soi et n'ont pas d'importance particulière dans le cadre de la présente invention, de sorte qu'ils ne seront pas décrits.

Afin de pouvoir fonctionner, chaque module de gestion 4 prélève sa tension d'alimentation aux bornes de l'élément de batterie 2 qu'elle gère. Ceci a pour conséquence que le point commun 6 de chaque module de gestion est à un potentiel différent, correspondant sensiblement au potentiel de l'une des bornes de l'élément de batterie 2 correspondant.

Comme les différents modules de gestion 4 doivent être connectés d'une manière ou d'une autre à l'unité de contrôle 5 par l'intermédiaire d'une liaison numérique pour échanger des informations avec elle pour les raisons expliquées ci-dessus, il est nécessaire, compte tenu des potentiels typiquement en jeu (par exemple des multiples de 24 V aux bornes 3,3' de la batterie), d'obtenir une isolation galvanique entre les différents modules de gestion 2 et entre chaque module de gestion et l'alimentation 10 de l'unité de contrôle 5, sans cependant avoir recours aux montages complexes et coûteux à photocoupleurs connus dans l'état de la technique.

A cet effet, l'invention prévoit de connecter les modules de gestion 4 de la manière représentée dans la figure 1. Dans cette réalisation, les modules de gestion sont connectés en série sur une liaison numérique schématisée en 7,7', chaque module de gestion 2 étant connecté aux modules adjacents par l'intermédiaire d'un condensateur 8,8', et le dernier module de gestion étant relié à l'unité de contrôle 5 de façon similaire, à travers des condensateurs 8a,8a'.

Dans l'exemple représenté, la liaison numérique ainsi obtenue comporte une première ligne ou bus de liaison 9 comportant des premiers condensateurs 8, et correspondant par exemple à une ligne ou un bus de transmission monodirectionnelle d'un signal d'horloge, et une seconde ligne ou bus de liaison 9' comportant des seconds condensateurs 8', et correspondant par exemple à une ligne ou un bus de transmission bidirectionnelle des impulsions d'un signal de données.

Dans l'exemple représenté, les lignes 9 et 9' représentées sont unifilaires, et les premiers et seconds condensateurs 8,8' associés sont alors uniques. Des condensateurs d'une capacité de l'ordre de 10 nF conviennent pour cette application.

L'effet des condensateurs 8,8' consiste à découpler les différents modules de gestion 4 et l'unité de contrôle 5 entre eux sur le plan des potentiels continus, tout en laissant passer les impulsions des signaux binaires d'horloge et de données entre les modules de gestion et l'unité de contrôle, les informations d'horloge et de données se propageant d'un module à un module adjacent ou à l'unité de contrôle à travers les premiers et seconds condensateurs (8,8'), indépendamment du potentiel continu d'alimentation de chaque module de gestion 4.

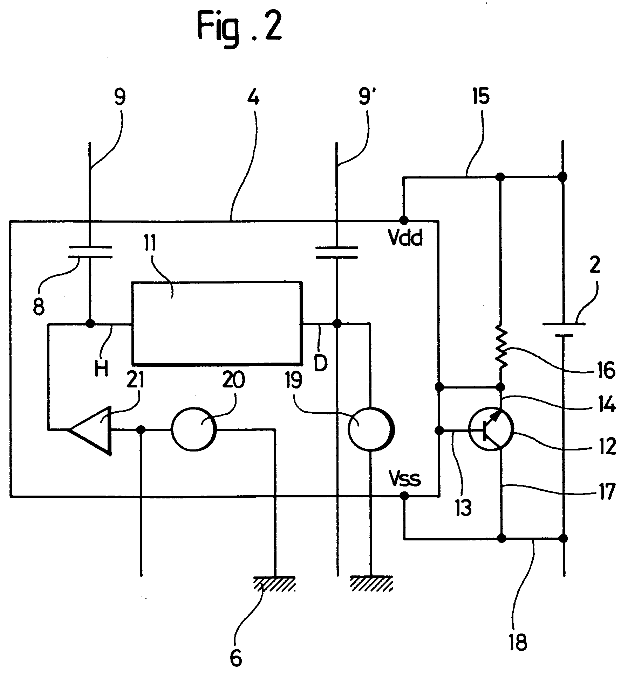

Un exemple de réalisation de module de gestion 4 va maintenant être décrit plus en détail, en liaison avec la figure 2.

Chaque module de gestion 4 comporte un circuit numérique 11 incorporant divers composants ou fonctions nécessaires à la gestion de l'élément de batterie 2. A titre d'exemple, le circuit numérique 11 intègre un convertisseur analogique/numérique bidirectionnel (non représenté), permettant, dans un premier sens, de numériser un paramètre de fonctionnement physique de l'élément de batterie 2 pour permettre sa transmission à l'unité de contrôle 5 par l'intermédiaire de la ligne bidirectionnelle 9', et permettant dans un second sens, de transformer une commande issue de l'unité de contrôle 5 en un signal analogique de commande d'un transistor 12 utilisé pour réguler le fonctionnement de l'élément de batterie 2. A cet effet, le signal analogique de commande est amené à la base 13 du transistor 12 dont l'émetteur 14 est connecté à la borne Vdd 15 de l'élément de batterie 2 à travers une résistance 16, et dont le collecteur 17 est connecté à l'autre borne Vss 18 de l'élément de batterie. De cette façon, le courant à travers le transistor 12 permet de réguler le courant de l'élément de batterie 2, en fonction des paramètres de fonctionnement de celui-ci.

Pour connaître le fonctionnement d'un élément de batterie 2, on utilise par exemple, de façon connue, sa température et/ou sa tension de sortie. A cet effet, on utilise des circuits capteurs de température 19 ou des circuits de mesure de tension 20, connectés entre le point commun 6 du module de gestion et les entrées correspondantes du circuit convertisseur 11, éventuellement à travers des amplificateurs 21 si le signal de mesure est trop faible pour être transmis directement au circuit 11. De tels circuits 19,20 de mesure de température et de tension sont connus de l'homme de métier, et ne seront donc pas décrits davantage.

Il est à noter que dans le cas préféré où la liaison entre les modules de gestion et l'unité de contrôle est réalisée sous la forme de lignes uniques 9,9' et non pas de bus, il est nécessaire de prévoir des moyens pour multiplexer les informations issues de chaque module de gestion 4 sur la liaison des données 9', et pour démultiplexer les commandes issues de l'unité de contrôle 5 vers les différents modules de gestion 4. A cet effet, les circuits numériques 11 de chaque module de gestion 4 sont pourvus de circuits de décodage d'adresses, par exemple sous la forme de compteurs d'impulsions (non représentés), chaque message de commande issu de l'unité de contrôle étant composé d'un nombre prédéterminé d'impulsions d'adressage correspondant à un module de gestion 4 unique, et d'impulsions de commande dont la conversion numérique/analogique produit un signal de commande du transistor 12.

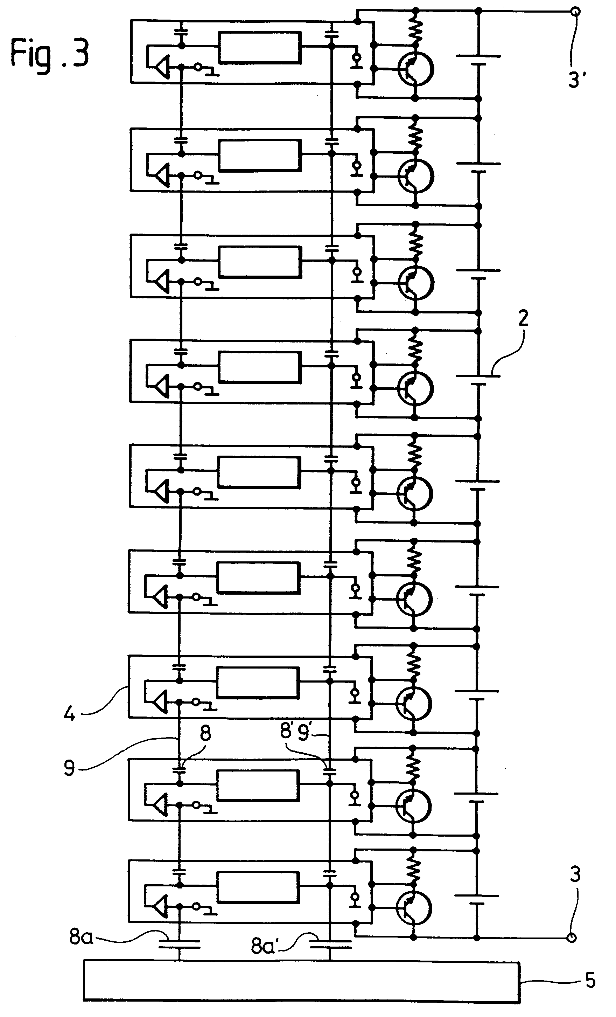

La figure 3 est une vue combinée des figures 1 et 2 montrant de façon plus détaillée l'ensemble du dispositif 1. Dans cette représentation, les condensateurs 8,8' ont été intégrés en pratique aux modules de gestion 4 correspondants, de sorte qu'il suffit d'interconnecter les modules de gestion 4 adjacents par l'intermédiaire de leurs bornes d'horloge et de données respectives.

De ce qui précède, il ressort que le dispositif remplit parfaitement les objectifs fixés. En particulier, la structure proposée est simple et modulaire, et ne fait pas appel à des composants coûteux.

En outre, grâce à la conception des modules de gestion du dispositif selon l'invention, il n'est pas nécessaire de faire de conversion de niveaux de logique pour adapter les données échangées entre l'unité de contrôle et les modules aux différents potentiels électriques qui existent dans le dispositif, et notamment aux paliers de 24 V successifs dans l'exemple décrit. Un seul système de logique suffit, et les impulsions d'horloge et de données sont communiquées entre les modules de gestion de batterie et l'unité de contrôle à travers des condensateurs, indépendamment de la tension continue de sortie de la batterie et de ses modules, et sans mettre en jeu de dispositifs complexes d'isolation galvanique.

## Revendications

1. Dispositif (1) de gestion d'une pluralité d'éléments de batterie électrique (2) connectés en série, comprenant une pluralité de modules (4) de gestion de batterie, chaque module de gestion étant connecté en parallèle aux bornes d'un élément de batterie (2) respectif et alimenté par sa tension de sortie, les modules de gestion (4) comportant un circuit numérique (11) et étant connectés à une unité de contrôle (5) de la batterie par au moins une liaison numérique (9,9') de façon à pouvoir échanger des informations binaires entre lesdits circuits numériques (11) et ladite unité de contrôle (5) de la batterie, caractérisé en ce que lesdits modules de gestion (4) sont reliés en série entre eux par ladite liaison numérique (9,9') et en ce qu'au moins un condensateur (8,8') est connecté en série sur ladite liaison numérique (9,9') entre deux modules de gestion successifs, de sorte que des informations binaires peuvent être échangées entre chaque module de gestion (4) et l'unité de contrôle (5), indépendamment des potentiels électriques aux bornes des éléments de batterie (2).

2. Dispositif (1) de gestion selon la revendication 1, caractérisé en ce que ledit circuit numérique (11) comporte une entrée d'horloge (H) et une entrée/sortie de données (D), et en ce que ladite liaison numérique (9,9') comporte une ligne d'horloge (9) reliant les entrées d'horloge des modules de gestion (4) successifs à une sortie d'horloge de l'unité de contrôle (5) à travers des premiers condensateurs ((8), et une ligne de données (9') reliant les entrées/sorties des modules de gestion successifs à une entrée/sortie de données de l'unité de contrôle (5) à travers des seconds condensateurs (8'), de sorte que les informations d'horloge et de données se propagent d'un module de gestion (4) à un module adjacent à travers lesdits premiers et seconds condensateurs (8,8'), indépendamment du potentiel (Vdd,Vss) des bornes d'alimentation de chaque module (4).

3. Dispositif (1) de gestion selon la revendication 1, caractérisé en ce que ledit circuit numérique (11) comporte un convertisseur analogique/numérique bidirectionnel recevant en entrée un signal d'horloge et un signal de données représentatif d'une commande issue de l'unité de contrôle (5), et délivrant en sortie un signal analogique apte à contrôler au moins un paramètre de fonctionnement de l'élément de batterie (2) associe.

4. Dispositif (1) de gestion selon la revendication 2, caractérisé en ce que ledit circuit numérique (11) comporte un circuit de décodage d'adresse pour décoder à partir du signal de données l'adresse du module de gestion (4) auquel la commande issue de l'unité de contrôle (4) est destinée.

5. Dispositif (1) selon la revendication 3, caractérisé en ce que, ledit paramètre de fonctionnement étant constitué par la température d'un élément de batterie (2), ce module de gestion (4) comporte un moyen de mesure (19) de la température de l'élément de batterie, et un moyen de commande (12) apte à régler la température de l'élément de batterie (2) en fonction de la commande reçue.

6. Dispositif (1) selon la revendication 3, caractérisé en ce que, ledit paramètre de fonctionnement étant constitué par la tension de sortie de l'élément de batterie (2), ce module de gestion (4) comporte un moyen de mesure (20) de mesure de la tension de sortie de l 'élément de batterie (2), et un moyen de commande (12) apte à régler ladite tension de sortie.

7. Dispositif (1) selon la revendication 3, caractérisé en ce que, ledit paramètre de fonctionnement étant constitué par le courant de sortie de l'élément de batterie (2), ce module de gestion (4) comporte un moyen de mesure (20) du courant de sortie de l 'élément de batterie (2), et un moyen de commande (12) apte à régler ledit courant de sortie.

8. Dispositif (1) selon l'une des revendications 5 à 7, caractérisé en ce que ledit moyen de commande (12) comporte un transistor (12) recevant sur sa base (13) une commande de réglage dudit paramètre, et dont le collecteur (17) et l'émetteur (14) sont connectés aux bornes de l'élément de batterie (2) à travers une résistance (16).

9. Dispositif (1) selon l'une des revendications précédentes, caractérisé en ce que ledit condensateur (8,8') a une capacité de l'ordre de 4,7 à 10 nanofarad.

10. Dispositif (1) selon l'une quelconque des revendications 5 à 7, caractérisé en ce qu'un amplificateur (21) est connecté entre la sortie dudit moyen de mesure (19,20) et une entrée de données du circuit convertisseur (11).
